# EUROPÄISCHE PATENTSCHRIFT

(11) **EP 0 652 236 B1**
(45) Veröffentlichungstag und Bekanntmachung des Hinweises auf die Patenterteilung: **24.09.1997**
(21) Anmeldenummer: 94116945.0
(22) Anmeldetag: 26.10.1994
(51) Int. Cl.: C08F 10/00, C08F 4/654

(54) **Verfahren zur Herstellung eines Poly-1-olefins**
Process for the preparation of poly-1-olefins
Procédé de préparation de poly-1-oléfines

(30) Priorität: 06.11.1993 DE 4337985
(43) Veröffentlichungstag der Anmeldung: 10.05.1995
(73) Patentinhaber: HOECHST AKTIENGESELLSCHAFT, 65929 Frankfurt am Main (DE)
(72) Erfinder: Breuers, Werner, Dr., D-65817 Eppstein (DE); Böhm, Ludwig, Dr., D-65795 Hattersheim (DE); Lecht, Rainer, Dr., D-65779 Kelkheim (DE)

(56) Entgegenhaltungen:
- EP-A- 0 257 131
- DATABASE WPI Derwent Publications Ltd., London, GB; AN 79-36804B POPOV 'Reaction vessel for processes in heterogeneous medium...' & SU-A-613 799 (POWER RES INST) 1. Juni 1978

## Beschreibung

Die Erfindung bezieht sich auf ein Verfahren zur Herstellung eines kugelförmigen Poly-1-olefins mittels eines hochaktiven, kugelförmigen Ziegler-Katalysators.

Es sind bereits eine Vielzahl von Katalysatoren des Ziegler-Typs zur Polymerisation von alpha-Olefinen bekannt. Viele dieser Katalysatoren basieren auf Magnesiumchlorid als Trägermaterial, das durch Umsetzung einer magnesiumorganischen Verbindung R₂ Mg mit einer chlororganischen Verbindung R'-Cl, wie z. B. Tetrachlormethan, erhalten wird (vgl. US 4 442 225, US 4 439 539, DE 30 10 202).

Dabei ist es jedoch nicht möglich, ein Magnesiumchlorid mit kugelförmigen Teilchen zu erhalten.

Andererseits ist bekannt, daß sphärisches Magnesiumchlorid bei der Umsetzung einer magnesiumorganischen Verbindung R₂Mg mit einer chlororganischen Verbindung R'-Cl in Gegenwart einer aluminiumorganischen Verbindung, wie Triethylaluminium, und einer Elektronendonorverbindung, wie Diisoamylether, entsteht (vgl. EP 99 284). Einschränkend gilt hierbei, daß R' ein Kohlenwasserstoffrest mit drei oder mehr C-Atomen sein muß und daß das dem Chlor benachbarte Kohlenstoffatom entweder ein sekundäres oder tertiäres C-Atom sein muß.

Bekannt sind weiterhin Verfahren, bei denen durch Umsetzung einer magnesiumorganischen Verbindung (z. B. ®BOMAG-A, Witco GmbH) mit einer chlororganischen Verbindung, einem Elektronen-Donator und einer Übergangsmetallverbindung kugelförmige Ziegler-Katalysatoren gebildet werden (vgl. EP 249 869, WO 9 200 332). Zur Bindung der Übergangsmetallkomponente sind in diesen Fällen Elektronen-Donatoren notwendig.

Es wurde nun gefunden, daß ein hochaktiver, kugelförmiger Ziegler-Katalysator hergestellt werden kann, wenn bei der Umsetzung einer magnesiumorganischen Verbindung mit einer chlororganischen Verbindung und gegebenenfalls einer aluminiumorganischen Verbindung anstelle eines Rührers ein Gerät zur Erzeugung von Stoßwellen zum Mischen der Reaktanden eingesetzt wird und das Reaktionsprodukt mit Alkoholen und einer Übergangsmetallverbindung umgesetzt wird, wobei auf die Zugabe des Alkohols auch verzichtet werden kann. Weiterhin wurde gefunden, daß der Katalysator besonders vorteilhaft in einem Gasphasen-Polymerisationsverfahren eingesetzt werden kann.

Die Erfindung betrifft somit ein Verfahren zur Herstellung eines Polyolefins durch Polymerisation von alpha-Olefinen bei einer Temperatur von 50 bis 150°C und einem Druck von 1 bis 40 bar in Gegenwart eines Katalysators bestehend aus einer Übergangsmetallkomponente (Komponente A) und einer metallorganischen Verbindung (Komponente B), dadurch gekennzeichnet, daß die Komponente A hergestellt wurde durch
a) Umsetzung einer magnesiumorganischen Verbindung der Formel R¹ₓMgR²₂₋ₓ, worin R¹ und R² gleiche oder verschiedene Alkylreste mit 2 bis 12 Kohlenstoffatomen sind und x eine Zahl zwischen 0 und 2 ist, mit einem aliphatischen primären Chlorkohlenwasserstoff in einer Menge von 0,5 bis 2,5 mol des Chlorkohlenwasserstoffs, bezogen auf 1 mol der magnesiumorganischen Verbindung, und gegebenenfalls einer aluminiumorganischen Verbindung der Formel AlR³ₙ(OR⁴)₃₋ₙ, worin R³ und R⁴ gleiche oder verschiedene Alkylreste mit 1 bis 8 Kohlenstoffatomen sind und n 0, 1, 2 und 3 bedeutet, oder dem Umsetzungsprodukt von Aluminiumtrialkylen oder Aluminiumdialkylhydriden mit 4 bis 20 Kohlenstoffatome enthaltenden Diolefinen, bei einer Temperatur von 30 bis 110°C,
b) Behandlung des erhaltenen Feststoffs mit einem Alkohol in einer Menge von 0,001 bis 1 mol pro Grammatom des im Feststoff enthaltenen Magnesiums bei einer Temperatur von -20 bis 150°C, und
c) Umsetzung des so erhaltenen Trägermaterials mit einer oder mehreren Verbindungen der Formel M¹Xₘ(OR⁵)₄₋ₘ, worin M¹ Titan oder Zirkon, R⁵ ein Alkylrest mit 2 bis 10 Kohlenstoffatomen, X ein Halogenatom und m eine ganze Zahl von 0 bis 4 ist, in einer Menge von 0,1 bis 5 mol pro Grammatom des im Trägermaterial enthaltenen Magnesiums bei einer Temperatur von 20 bis 180°C,
   wobei in den Schritten a), b) und c) zum Durchmischen der Reaktanten anstelle eines Rührers ein Gerät zur Erzeugung von Stoßwellen verwendet wurde,
oder durch Ausführung der Schritte a und c unter Auslassung von b, oder durch gleichzeitiges Ausführen der Schritte b und c.

Zunächst wird ein kugelförmiger Feststoff gebildet. Dazu wird eine magnesiumorganische Verbindung mit einer organischen Chlorverbindung und gegebenenfalls einer aluminiumorganischen Verbindung umgesetzt, wobei in diesem und in den folgenden Reaktionsschritten zum Durchmischen der Reaktanten anstelle eines Rührers ein Gerät zur Erzeugung von Stoßwellen verwendet wird.

Als Gerät zur Erzeugung von Stoßwellen dient ein Stoßwellengenerator, beispielsweise ein unter dem Namen ®Vibromischer E1 von der Firma Chemlab GmbH. erhältliches Gerät.

Die magnesiumorganische Verbindung ist ein Magnesiumdialkyl der Formel R¹ₓMgR²₂₋ₓ, worin R¹ und R² gleiche oder verschiedene Alkylreste mit 2 bis 12 Kohlenstoffatomen sind und x eine Zahl zwischen 0 und 2. Bevorzugt werden Di-n-butylmagnesium, Di-n-octylmagnesium, n-Butyl-n-octylmagnesium, n-Butylethylmagnesium, n-Butyl-sec-butylmagnesium oder Gemische dieser Verbindungen. Besonders bevorzugt ist ein Magnesiumdialkyl der Formel [(n-C₄H₉)_{1,2-1,7}(n-C₈H₁₇)_{0,3-0,8}Mg], insbesondere [(n-C₄H₉)_{1,5}(n-C₈H₁₇)_{0,5}Mg].

Als aliphatischer primärer Chlorkohlenwasserstoff ist beispielsweise Tetrachlormethan, Trichlormethan, Methylenchlorid, 1-Chlorpropan oder 1,1,1-Trichlorethan geeignet, wobei auch Gemische eingesetzt werden können. Bevorzugt verwendet werden Trichlormethan und Tetrachlormethan.

Als aluminiumorganische Verbindung ist eine Alkyl- oder Alkoxyaluminiumverbindung der Formel AlR³ₙ(OR⁴)₃₋ₙ, geeignet, worin R³ und R⁴ gleiche oder verschiedene Alkylreste mit 1 bis 8 Kohlenstoffatomen sind und n 0, 1, 2 und 3 bedeutet. Ebenso geeignet ist auch das Umsetzungsprodukt von Aluminiumtrialkylen oder Aluminiumdialkylhydriden mit 4 bis 20 Kohlenstoffatome enthaltenden Diolefinen, vorzugsweise Isopren. Beispielsweise sei Aluminiumisoprenyl genannt.

Zur Darstellung des aus kugelförmigen Teilchen bestehenden Feststoffs wird die magnesiumorganische Verbindung und gegebenenfalls die aluminiumorganische Verbindung in einem inerten, flüssigen Kohlenwasserstoff unter Stickstoff- oder Argonatmosphäre gelöst. Diese Lösung wird unter Zuhilfenahme eines Gerätes zur Erzeugung von Stoßwellen bei einer Temperatur von 30 bis 110°C, bevorzugt von 40 bis 80°C, mit einer Lösung der chlororganischen Verbindung zusammengebracht. Die Umsetzung kann in der Weise durchgeführt werden, daß man die chlororganische Verbindung zu der Lösung der magnesiumorganischen Verbindung in dem flüssigen Kohlenwasserstoff gibt, oder umgekehrt.

Bei dieser Umsetzung kann sowohl die Reaktionszeit als auch der Verdünnungsgrad der Reaktanten und die Intensität der Stoßwellen zur Mischung der Reaktanten in weiten Grenzen variiert werden. Die Reaktionszeit beträgt 30 min bis zu mehreren Stunden, vorzugsweise 1 Stunde bis 5 Stunden. Die Reaktanten werden als 0,5 bis zu 15 molare Lösungen eingesetzt.

Der Ansatz enthält bis zu 2,5 mol, bevorzugt bis zu 2,0 mol der chlororganischen Verbindung, bezogen auf ein mol der magnesiumorganischen Verbindung.

Es entsteht eine Suspension eines aus kugelförmigen Teilchen bestehenden Feststoffs. Die Suspension wird ohne weitere Waschschritte dem nächsten Reaktionsschritt zugeführt. Der Feststoff kann jedoch auch zunächst in getrockneter Form isoliert, gelagert und zur späteren Weiterverarbeitung resuspendiert werden.

Zur Suspension des aus kugelförmigen Teilchen bestehenden Feststoffes wird ein aliphatischer Alkohol gegeben. Der Alkohol wird im Molverhältnis 0,001 bis 1, bevorzugt 0,01 bis 0,5 mol, bezogen auf ein Grammatom Magnesium bei einer Temperatur von -20 bis 150°C, bevorzugt 20 bis 90°C, zu dem Feststoff gegeben. Die Reaktionszeit beträgt in Abhängigkeit von der Reaktivität der Reaktanten 0,1 bis 3 Stunden, vorzugsweise bis zu 1 h.

Eingesetzt werden aliphatische oder cycloaliphatische Alkohole oder Alkohole mit mehreren Hydroxyfunktionen. Beispiele sind Methanol, Ethanol, n-Propanol, i-Propanol, n-Butanol, sec-Butanol, t-Butanol, Pentanole, Hexanole, Amylalkohol, Ethylhexanol, Glykol, Glycerin und Cyclohexanol. Besonders bevorzugt werden Ethanol und n-Butanol verwendet.

Das auf diese Weise erhaltene kugelförmige Trägermaterial wird unter Stickstoff- oder Argonatmosphäre mit einer Übergangsmetallverbindung der Formel M¹Xₘ(OR⁵)₄₋ₘ umgesetzt, worin M¹ Titan oder Zirkon, R⁵ ein Alkylrest mit 2 bis 10 Kohlenstoffatomen, X ein Halogenatom, bevorzugt Chlor, und m eine ganze Zahl von 0 bis 4, bevorzugt aber 2 oder 4 ist. Man kann ein Gemisch aus mehreren dieser Verbindungen oder mehrere dieser Verbindungen nacheinander einsetzen. Möglich ist auch die parallele Zugabe von Alkohol und einer oder mehrerer Verbindungen des Typs M¹Xₘ(OR⁵)₄₋ₘ.

Bevorzugte Verbindungen sind z. B. TiCl₄, TiCl₃(OC₂H₅), TiCl₃(O-iC₃H₇), TiCl₂(OC₂H₅)₂, TiCl₂(O-iC₃H₇)₂, TiCl₂(O-CH₂C₆H₅)₂, TiCl(OC₂H₅)₃, Ti(OC₂H₅)₄ und ZrCl₄.
Ganz besonders bevorzugt ist TiCl₄.

In der vorstehend beschriebenen Reaktion wird die Titan- oder Zirkonverbindung in einer Menge von 0,5 bis 5 mol, bevorzugt 0,8 bis 2,5 mol, insbesondere 1 mol, bezogen auf ein Grammatom Magnesium des kugelförmigen Trägermaterials, eingesetzt. Die Reaktionstemperatur beträgt 20 bis 180°C, bevorzugt 60 bis 100°C, und die Reaktionszeit beträgt in Abhängigkeit von der geforderten Titan- bzw. Zirkonbelegung 30 min bis zu mehreren Stunden, bevorzugt 1 bis 2 Stunden.

Die auf diese Weise hergestellt Katalysatorkomponente A wird abschließend bei einer Temperatur von 0 bis 100°C, bevorzugt von 10 bis 60°C, durch wiederholtes Waschen mit einem inerten Kohlenwasserstoff von löslichen Komponenten, wie Metall- oder Halogenverbindungen befreit.

Die erfindungsgemäß hergestellte Katalysatorkomponente A liegt in Form von kugelförmigen Teilchen vor, deren mittlerer Durchmesser 20 bis 150 µm, bevorzugt 40 bis 80 µm, beträgt und die ein Verhältnis von mittlerem Durchmesser in Masse, Dₘ, zu mittlerem Durchmesser in Zahl, Dₙ, von kleiner 1,5, vorzugsweise 1,02 bis 1,3, aufzuweisen.

Zur Erhöhung der mechanischen Stabilität kann die Katalysatorkomponente A vor der eigentlichen Polymerisation einer Präpolymerisation unterzogen werden. Dazu wird die Katalysatorkomponente A in einen Reaktor überführt, in dem ein Suspensionsmittel und Aluminiumalkyl vorgelegt wurden.

Als Suspensionsmittel dient ein gesättigter Kohlenwasserstoff mit 3 bis 15 Kohlenstoffatomen, wie zum Beispiel Propan, Butan, Pentan, Hexan, Heptan, Octan, Nonan, Decan, Cyclohexan oder Gemische derartiger Verbindungen oder deren Isomeren.

Das Aluminiumalkyl ist ein solches mit 1 bis 20 Kohlenstoffatomen in den Alkylresten, wie es unter Komponente B beschrieben wird.

Die Präpolymerisation wird bei einer Temperatur von 50 bis 110°C, vorzugsweise 50 bis 95°C, einem Druck von 0,5 bis 20 bar, vorzugsweise 0,5 bis 8 bar, während einer Zeit von 0,5 bis 6 h, vorzugsweise 0,5 bis 1,5 h durchgeführt.

Die Komponente A wird in Form einer Suspension in einem inerten Kohlenwasserstoff, oder aber nach Abtrennen des Suspensionsmittels trocken oder als Präpolymerisat zur Polymerisation von alpha-Olefinen eingesetzt. Bevorzugt ist die Polymerisation von Ethylen oder Propylen oder die Copolymerisation von Ethylen mit Propylen oder die Copolymerisation von Ethylen oder Propylen mit einem alpha-Olefin mit 4 bis 10 Kohlenstoffatomen und einer oder mehreren Doppelbindungen, wie z. B. 1-Buten, Isobuten, 4-Methylpenten, 1-Hexen oder 1,3-Butadien.

Die Polymerisation wird sowohl kontinuierlich als auch diskontinuierlich in Suspension in einem gesättigten Kohlenwasserstoff mit 3 bis 15 Kohlenstoffatomen, wie z. B. Propan, Butanen, Pentanen, Hexanen, Heptanen, Octanen, Nonanen, Cyclohexanen oder Gemischen derartiger Verbindungen oder kontinuierlich in der Gasphase durchgeführt. Bevorzugt ist die Polymerisation in der Gasphase.

Im allgemeinen wird Wasserstoff als Molmassenregler verwendet.

Als Komponente B (Cokatalysator) wird eine metallorganische Verbindung der Gruppe I bis III des Periodensystems eingesetzt. Bevorzugt wird eine Aluminiumverbindung der Formel AlR⁶ₚY₃₋ₚ eingesetzt, worin p 1, 2 oder 3 und R⁶ ein Alkyl- oder Arylrest mit 1 bis 20 Kohlenstoffatomen, Y Wasserstoff, ein Halogenatom oder eine Alkoxy- oder Aryloxygruppe mit jeweils 1 bis 20 Kohlenstoffatomen ist.

Beispiele sind Aluminiumtrialkyle oder Aluminiumalkylhydride, weiterhin halogenhaltige aluminiumorganische Verbindungen, wie Dialkylaluminiumhalogenide, Alkylaluminiumdihalogenide oder Alkylaluminiumsesquichloride, die allein oder im Gemisch eingesetzt werden können. Besonders bevorzugt werden als aluminiumorganische Verbindungen chlorfreie Verbindungen eingesetzt. Hierfür eignen sich einerseits Aluminiumtrialkyle AlR⁶₃ oder Aluminiumdialkylhydride der Formel AlR⁶₂H, in denen R⁶ ein Alkylrest mit 1 bis 20 Kohlenstoffatomen bedeutet. Beispiele sind Al(CH₃)₃, Al(C₂H₅)₃, Al(C₂H₅)₂H, Al(C₃H₇)₃, Al(C₃H₇)₂H, Al(iC₄H₉)₃, Al(iC₄H₉)₂H, Al(C₈H₁₇)₃, Al(C₁₂H₂₅)₃, Al(C₂H₅)(C₁₂H₂₅)₂, Al(iC₄H₉)(C₁₂H₂₅)₂.

Andererseits eignen sich als chlorfreie aluminiumorganische Verbindungen auch die Umsetzungsprodukte von Aluminiumtrialkylen oder Aluminiumdialkylhydriden mit Kohlenwasserstoffresten mit 1 bis 6 Kohlenstoffatomen, vorzugsweise Al(iC₄H₉)₃ oder Al(iC₄H₉)₂H, mit 4 bis 20 Kohlenstoffatome enthaltenden Diolefinen, vorzugsweise Isopren. Beispielsweise sei Aluminiumisoprenyl genannt.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:
Al(C₂H₅)₃ und Al(iC₄H₉)₃, Al(C₂H₅)₂Cl und Al(C₈H₁₇)₃,
Al(C₂H₅)₃ und Al(C₈H₁₇)₃, Al(C₄H₉)₂H und Al(C₈H₁₇)₃,
Al(C₄H₉)₃ und Al(C₈H₁₇)₃, Al(C₂H₅)₃ und Al(C₁₂H₂₅)₃,
Al(C₄H₉)₃ und Al(C₁₂H₂₅)₃, Al(C₂H₅)₃ und Al(C₁₆H₃₃)₃,
Al(C₃H₇)₃ und Al(C₁₈H₃₇)₂(iC₄H₉) und Aluminiumisoprenyl (Umsetzungsprodukt von Isopren mit Al(iC₄H₉)₃ oder Al(iC₄H₉)₂H).

Die Komponente A kann als Suspension direkt mit der Komponente B umgesetzt werden; sie kann jedoch zunächst als Feststoff isoliert, gelagert und zur späteren Weiterverwendung resuspendiert werden.

Das Mischen der Komponente A und der Komponente B kann vor der Polymerisation in einem Rührkessel bei einer Temperatur von -30 bis 150°C, vorzugsweise -10 bis 120°C erfolgen. Es ist auch möglich, die beiden Komponenten direkt im Polymerisationskessel bei einer Polymerisationstemperatur von 20 bis 150°C zu vereinigen. Die Zugabe der Komponente B kann jedoch auch in zwei Schritten erfolgen, indem vor der Polymerisationsreaktion die Komponente A mit einem Teil der Komponente B bei einer Temperatur von -30 bis 150°C umgesetzt wird und die weitere Zugabe der Komponente B in dem Polymerisationsreaktor bei einer Temperatur von 20 bis 200°C erfolgt.

Die Polymerisationstemperatur beträgt 50 bis 150°C, bevorzugt 50 bis 100°C, und der Druck 1 bis 40 bar, vorzugsweise 3 bis 25 bar.

Besonders vorteilhaft wird der oben beschriebene Katalysator in dem in den Figuren dargestellten Gasphasen-Polymerisations-Verfahren eingesetzt.

Es bedeuten
- (1): Reaktor oder erster Reaktor
- (11): Gasverteiler
- (12): Wirbelbett
- (13): Kreisgasleitung
- (14): Verdichter
- (15): Wärmetauscher
- (16): Zuleitung
- (17): Abgasleitung
- (18): Zuleitung
- (19): Austragsleitung
- (3): Vorratsbunker
- (31): Absperrorgan
- (32): Entnahmeleitung
- (33): Zuleitung
- (34): Ableitung
- (35): Absperrorgan
- (2): zweiter Reaktor
- (21): Gasverteiler
- (22): Wirbelbett
- (23): Kreisgasleitung
- (24): Verdichter
- (25): Wärmetauscher
- (26): Zuleitung
- (27): Abgasleitung
- (29): Austragsleitung
- [41]: Füllstandsmessung
- [42]: Druckmessung
- [43]: Temperaturmessung
- [44]: Druckdifferenzmessung
- [45]: Volumenstrommessung
- [46]: Gasanalytik

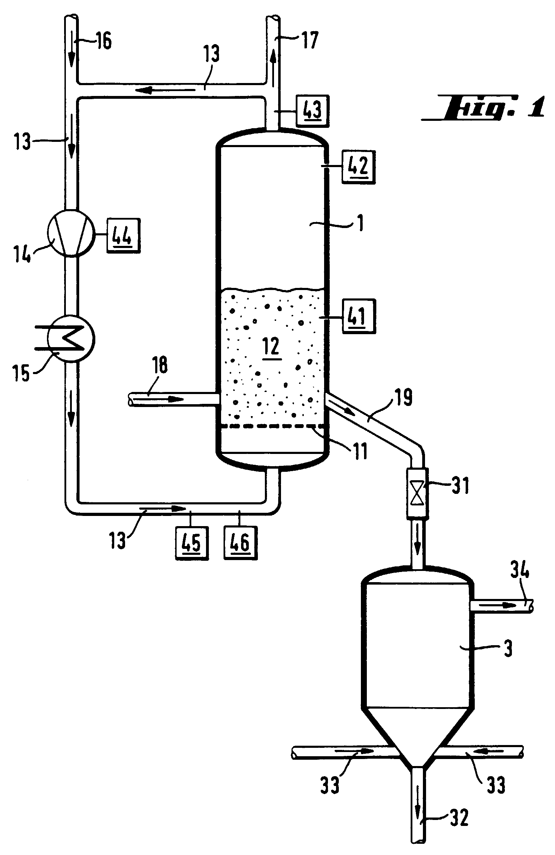

Figur 1 zeigt die für ein einstufiges Polymerisationsverfahren verwendete Apparatur. Der Reaktor (1) mit Gasverteiler (11) ist mit einer Kreisgasleitung (13) versehen. In dieser Kreisgasleitung (13) ist ein Verdichter (14) angeordnet, dem ein Wärmetauscher (15) nachgeschaltet ist. Vor dem Verdichter (14) mündet eine Zuleitung (16) in die Kreisgasleitung (13). Eine weitere Zuleitung (18) führt in den Reaktor (1). Am Kopf des Reaktors (1) befindet sich eine Abgasleitung (17) in der Kreisgasleitung (13). Über die Austragsleitung (19) und das Absperrorgan (31) kann der Reaktor (1) in einen Vorratsbunker (3), welcher mit einer Entnahmeleitung (32) versehen ist, entleert werden. Der Vorratsbunker (3) kann über die Zuleitungen (33) und die Ableitung (34) mit einem inerten Gas gespült werden. Die Apparatur ist mit Geräten zur Füllstandsmessung [41], zur Druckmessung [42], zur Temperaturmessung [43], zur Druckdifferenzmessung [44], zur Volumenstrommessung [45] und zur Bestimmung der Gaszusammensetzung (Gasanalytik) [46] ausgerüstet.

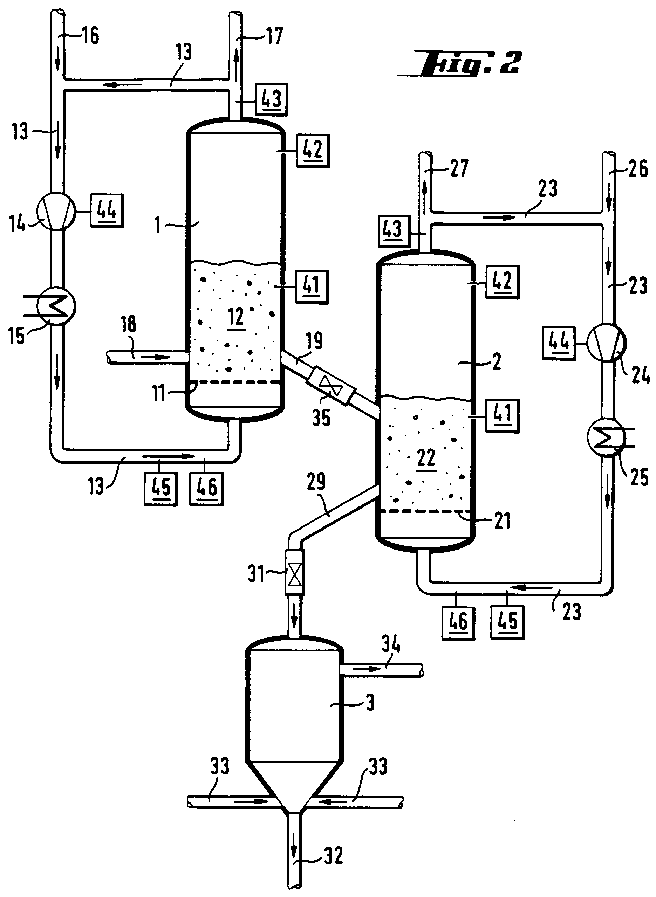

Figur 2 zeigt die für ein zweistufiges Polymerisationsverfahren verwendete Apparatur. Die in Figur 1 beschriebene Apparatur ist ergänzt durch einen zweiten Reaktor (2) mit Gasverteiler (21), der durch die Austragsleitung (19) mit dem Reaktor (1) verbunden ist. Der Reaktor (2) ist mit einer Kreisgasleitung (23) versehen, in welcher ein Verdichter (24) mit nachgeschaltetem Wärmetauscher (25) eingefügt ist. Eine Zuleitung (26) führt vor dem Verdichter (24) in die Kreisgasleitung (23) und am Kopf des Reaktors (2) befindet sich eine Abgasleitung (27). Über eine Austragsleitung (29) mit Absperrorgan (31) kann der Reaktor (2) in den Vorratsbunker (3) entleert werden. Auch der zweite Reaktor ist mit Geräten zur Füllstandsmessung [41], zur Druckmessung [42], zur Temperaturmessung [43], zur Druckdifferenzmessung [44], zur Volumenstrommessung [45] und zur Bestimmung der Gaszusammensetzung (Gasanalytik) [46] ausgerüstet.

Ein grobkörniges, aus kugelförmigen Teilchen bestehendes Wirbelbett (12) wird in den Reaktor (1) gefüllt. In Bodennähe des Reaktors befindet sich der Gasverteiler (11), der das Wirbelbett (12) im Ruhezustand trägt und im Betriebszustand für das im Wirbelgas (Kreisgas) enthaltene feinkörnige Polymere durchlässig ist. Das Reaktionsgas wird durch die Kreisgasleitung (13) unter den Gasverteiler (11) geführt und wirbelt das Wirbelbett (12) nach Durchtritt durch den Gasverteiler (11) vollständig auf. Die Durchmischung des Wirbelbettes (12) durch das Kreisgas kann jedoch auch unterhalb des sogenannten "Wirbelpunktes" erfolgen. Zusätzlich kann der Reaktor (1) mit einem Rührorgan ausgestattet werden, welches auch wandgängig sein kann. Der Kreisgasstrom wird durch einen Verdichter (14) erzeugt. Die Polymerisationswärme wird durch einen Wärmetauscher (15) abgeführt.

Der Katalysator wird als trockener Feststoff, oder suspendiert in einem leichtsiedenden Kohlenwasserstoff, wie beispielsweise Propan, Butan oder Pentan oder als Paste, oberhalb des Gasverteilers (11) seitlich durch die Zuleitung (18) dosiert. Die Zuführung des Katalysators erfolgt vorzugsweise unterhalb der Oberfläche des Wirbelbettes (12). Die Katalysator führende Leitung (18) kann mit einem inerten Gas gespült werden.

Die Reaktanten Ethylen, Wasserstoff, Comonomer (beispielsweise Propylen, Buten, Methylpenten, Hexen) und Cokatalysator (beispielsweise Triethylaluminium, Isoprenylaluminium, Triisobutylaluminium, Ethylaluminiumsesquichlorid), wie auch der Hilfsstoff Stickstoff, werden vor dem Verdichter (14) durch die Leitung (16) in das Kreisgas eingeleitet. Durch die Leitung (17) wird Abgas entnommen. Der Abgasmengenstrom kann gegebenenfalls durch eine Regeleinrichtung kontrolliert werden.

Alle an der Apparatur erfaßten Meßwerte können vorteilhaft einem Prozeßleitsystem zugeleitet und zur Prozeßsteuerung herangezogen werden.

Das freifließende Polymerpulver wird über eine Austragsleitung (19) in einen Vorratsbunker (3) ausgetragen. Die Austragsleitung (19) enthält ein Absperrorgan (31), welches aus einer Schleuse oder aus zwei hintereinandergeschalteten taktweise betriebenen Ventilen bestehen kann, so daß der Austrag kontinuierlich oder quasikontinuierlich erfolgt. Die Austragsleitung (19) ist durch ein genügend großes Gefälle als Falleitung ausgestaltet. Der Vorratsbunker (3) kann durch die Zuleitungen (33) und die Ableitung (34) mit einem Inertgas, beispielsweise Stickstoff, gespült werden, um das Monomere aus dem Produkt zu entfernen. Dabei ist es möglich, das Produkt kontinuierlich durchzusetzen und mit dem Inertgas zu spülen.

Das Verfahren kann einstufig (Figur 1) oder mehrstufig (Figur 2) betrieben werden. Figur 2 zeigt schematisch die zweistufige Betriebsweise. Wie aus der Darstellung hervorgeht, entsprechen die einzelnen Stufen der mehrstufigen Fahrweise im wesentlichen dem einstufigen Verfahren. Das Produkt aus der ersten Stufe gelangt über die Leitung (19) und ein Absperrorgan (35) (welches dem Absperrorgan (31) entspricht) innerhalb des Wirbelbettes (22) in den Reaktor (2). Im Gegensatz zur ersten Stufe fehlt hier die Katalysator-Dosierung. Die Austragsleitung (29) ist als Falleitung ausgebildet und führt das Polymere in den Vorratsbunker (3). In diesem Falle enthält die Leitung (29) das Absperrorgan (31).

Die Teilchen der nach dem erfindungsgemäßen Verfahren hergestellten Polymerisate und Copolymerisate zeichnen sich aufgrund der Verwendung von Stoßwellen als Mischmethode für die Reaktanten durch eine kompakte, gleichmäßige kugelförmige Gestalt mit einer sehr engen Korngrößenverteilung aus. Das Verhältnis von mittlerem Durchmesser in Masse, Dₘ, zu mittlerem Durchmesser in Zahl, Dₙ, ist kleiner 1,5, vorzugsweise von 1,02 bis 1,3. Das Verhältnis D/d liegt im Bereich von 1,05 bis 1,2. Der Durchmesser des Polymerkorns liegt im Bereich von 100 bis 1500 µm, vorzugsweise 300 bis 1000 µm. Die Polymeren besitzen eine hohe Schüttdichte.

Ein weiterer Vorteil des erfindungsgemäß zu verwendenden Katalysators liegt in der hohen Katalysatoraktivität, so daß nur sehr geringe Mengen des Katalysators für die Polymerisation notwendig sind. Dadurch müssen die Polymerisate auch keiner zusätzlichen Nachbehandlung, wie beispielsweise aufwendigen Wasch- oder Reinigungsoperationen, unterworfen werden. Weiterhin treten keine unerwünschten Verfärbungen des Produktes durch Katalysatorreste auf.

Der Restgehalt an Titan und/oder Zirkonium in den erfindungsgemäß hergestellten Polymeren beträgt weniger als 10 ppm, vorzugsweise weniger als 3 ppm.

Durch seine gute Wasserstoffansprechbarkeit ist der Katalysator besonders in zweistufigen Verfahren zur Herstellung von Polymeren mit einer breiten, bimodalen Molmassenverteilung geeignet.

Der Ersatz von schwefelhaltigen Elektronen-Donatoren wie Diethylsulfit durch Alkohole wie Ethanol führt zu einer Beseitigung der Geruchsbelästigung und zu erweiterten Einsatzmöglichkeiten des Polymeren.

Durch die kugelförmige Gestalt der Teilchen und die damit verbundene sehr gute Rieselfähigkeit der Polymerisate und Copolymerisate werden erhebliche Vereinfachungen und Vorteile bei der Handhabung, Trocknung und Verarbeitung erzielt.

Die Erfindung wird nachfolgend durch die Beispiele näher erläutert.

Der Schmelzindex MFI (190/5) wurde nach DIN 53735 bei 190°C und bei einer Belastung von 5 kp bestimmt.

Das Verhältnis Dₘ zu Dₙ wurde nach NF X 11-630 vom Juni 1981 bestimmt:
- Dₘ: = [Σ nᵢ(Dᵢ)³Dᵢ]/[Σ nᵢ(Dᵢ)³]
- Dₙ: = [Σ nᵢDᵢ]/Σnᵢ
- nᵢ: = Anzahl der Proben gleichen Durchmessers
- Dᵢ: = Durchmesser der i-ten Probe

Die Korngrößenverteilung Dₘ/Dₙ der Komponente A wurde mittels Bildanalyse ermittelt.

### Beispiel 1

306 cm³ einer Lösung von Butyloctylmagnesium (285 mmol Mg) der ungefähren Zusammensetzung [(n-C₄H₉)_{1,5}(n-C₈H₁₇)_{0,5}Mg], welches unter dem Namen ®BOMAG-A in Handel erhältlich ist, in Heptan wurde mittels Stoßwellen (®Vibromischer E1, Chemlab GmbH.) anstelle eines Rührers in Bewegung gehalten. Innerhalb von 90 min wurden 27,7 cm³ (285 mmol) CCl₄ in 140 cm³ Benzin (Siedebereich 100/120°C) bei einer Temperatur von 70 bis 80°C zugegeben. Anschließend wurde der Ansatz 120 min bei 85°C mittels Stoßwellen durchmischt. Die dabei resultierende Suspension wurde innerhalb von 5 Minuten bei einer Temperatur von 85°C mit einer Mischung aus 7,6 cm³ (130 mmol) absolutem Ethanol und 8,4 cm³ Benzin (Siedebereich 100/120°C) versetzt und anschließend eine Stunde bei 85°C mittels Stoßwellen durchmischt. Danach wurden 18,9 cm³ (171 mmol) TiCl₄ bei einer Temperatur von 93 bis 97°C innerhalb von 10 Minuten zugetropft. Die Suspension wurde zwei Stunden bei 98°C mittels Stoßwellen gemischt und anschließend 6 x mit je 700 cm³ Benzin (Siedebereich 100/120°C) bei 50 bis 60°C gewaschen. Die Analyse ergab ein Magnesium:Titan:Chlor-Verhältnis
von Mg : Ti : Cl = 1 : 0,041 : 2,14.
Dₘ/Dₙ = 1,13.

### Beispiel 2

306 cm³ einer Lösung von Butyloctylmagnesium (285 mmol Mg; wie in Beispiel 1) in Heptan wurden innerhalb von 90 min mit einer Lösung von 49 cm³ (605 mmol) CHCl₃ in 140 cm³ Benzin (Siedebereich 100/120°C) versetzt und danach noch 120 min bei 75 bis 77 °C mittels Stoßwellen durchmischt. Die dabei resultierende Suspension wurde bei 85°C innerhalb von 15 Minuten mit einer Mischung aus 3,6 cm³ (62 mmol) absolutem Ethanol und 12,4 cm³ Benzin (Siedebereich 100/120°C) versetzt und anschließend bei 85°C eine Stunde mittels Stoßwellen durchmischt. Danach wurden 31,4 cm³ (285 mmol) TiCl₄ bei einer Temperatur von 85°C innerhalb von 25 Minuten zugetropft. Die Suspension wurde für 2 Stunden bei 94°C mittels Stoßwellen durchmischt und anschließend 6 x mit je 700 cm³ Benzin (Siedebereich 100/120°C) bei 50 bis 60°C gewaschen. Die Analyse ergab ein Magnesium:Titan:Chlor-Verhältnis von
Mg : Ti : Cl = 1 : 0,059 : 2,17.
Dₘ/Dₙ = 1,09.

### Beispiel 3

Es wurde analog dem Beispiel 2 verfahren, jedoch wurden statt absolutem Ethanol 62 mmol n-Butanol verwendet. Die Analyse ergab ein Magnesium:Titan:Chlor-Verhältnis von
Mg : Ti : Cl = 1 : 0,41 : 2,19.
Dₘ/Dₙ = 1,09.

### Beispiel 4

Es wurde analog dem Beispiel 2 verfahren, jedoch wurden statt Ethanol 26,2 cm³ (125 mmol) Tetraethylorthotitanat zugegeben. Die Analyse ergab ein Magnesium:Titan:Chlor-Verhältnis von
Mg : Ti : Cl = 1 : 0,044 : 2,19.
Dₘ/Dₙ = 1,04.

### Beispiel 5

In einem 1,5 dm³ Stahlautoklaven wurden 690 cm³ Benzin (Siedebereich 100/120°C), 20 mmol Triethylaluminium und 93,2 cm³ (entsprechend 10 mmol Titan) der Katalysatorsuspension aus Beispiel 3 vorgelegt. Anschließend wurden 2 bar Argon und 1,1 bar Wasserstoff aufgedrückt, die Präpolymerisation fand nach Zugabe von Ethylen bei einem Gesamtdruck von 6 bar und einer Temperatur von 65°C innerhalb einer Stunde statt.

### Beispiele 6 bis 12

Eine Ethylenpolymerisation wurde entsprechend der Tabelle in einem 1,5 dm³ Stahlautoklaven bei einer Temperatur von 85°C und einem Druck von 6 bar in 800 cm³ Benzin (Siedebereich 100/120°C) durchgeführt. Als Komponente B wurden jeweils 1 mmol Triethylaluminium (TEA) oder 5 mmol Triisobutylaluminium TIBA zugesetzt. Der Anteil an Polymerteilchen < 100 µm betrug < 0,1 %.

**Tabelle**

| Ethylenpolymerisation | | | | | | | |
|---|---|---|---|---|---|---|---|
| Bsp. | Komp. A nach Bsp | Komp.B | H₂ bar | Ausbeute g PE/mmol Ti | MFI 190/5 g/10' | d₅₀ µm | SD g/l |
| 6 | 1 | TEA | 3,9 | 29 200 | 10,4 | 630 | 320 |
| 7 | 1 | TIBA | 1,5 | 55 800 | 0,06 | 1230 | 300 |
| 8 | 2 | TIBA | 3,9 | 25 800 | 11,6 | 570 | 330 |
| 9 | 3 | TIBA | 2,0 | 35 300 | 1,1 | 750 | 300 |
| 10 | 3 | TEA | 3,9 | 23 200 | 10,8 | 590 | 320 |
| 11 | 4 | TEA | 3,9 | 9 800 | 19,0 | 680 | 290 |
| 12 | 5 | TIBA | 2,1 | 33 800 | 0,8 | 820 | 310 |

### Beispiel 13

Zur Gasphasenpolymerisation wurde die in Figur 1 schematisch dargestellte Apparatur verwendet. Der Reaktor wurde vor dem Reaktionsstart mit 20 kg Polyethylen, welches einen mittleren Korndurchmesser von 500 µm aufwies, gefüllt. Bei 80°C und 20 bar wurden 45 m³/h eines Gasgemisches aufwärts durch das Schüttbett geleitet. Das Gasgemisch setzte sich aus Ethylen, Wasserstoff und Stickstoff zusammen. Der Reaktor wurde kontinuierlich mit 2 kg/h Ethylen und mit Katalysator beschickt. Der Katalysator aus Beispiel 2 wurde dazu analog Beispiel 8 einer Vorpolymerisation unterworfen. Die Katalysatormenge wurde so geregelt, daß der Ethylenpartialdruck konstant blieb. Die Dosierung des Wasserstoffs - als Molmassenregler - wurde so geregelt, daß das Verhältnis der Partialdrücke von Ethylen und Wasserstoff konstant blieb. Neben dem Katalysator wurde Triethylaluminium als Cokatalysator in einem Verhältnis von Al/Ti von 200:1 dosiert. Das unter diesen Bedingungen erhaltene Polymere besaß einen MFI 190/5 von 3 g/10 min, einen d₅₀-Wert von 600 µm, einen Anteil mit d₅₀ < 200 µm von weniger als 2 % und eine Schüttdichte von 500 g/dm³.

## Patentansprüche

1. Verfahren zur Herstellung eines Polyolefins durch Polymerisation eines alpha-Olefins, bei dem in einem ersten Verfahrensschritt eine Komponente A hergestellt wird durch
a) Umsetzung einer magnesiumorganischen Verbindung der Formel R¹ₓMgR²₂₋ₓ, worin R¹ und R² gleiche oder verschiedene Alkylreste mit 2 bis 12 Kohlenstoffatomen sind und x eine Zahl von 0 bis 2 ist, mit einem aliphatischen primären Chlorkohlenwasserstoff in einer Menge von 0,5 bis 2,5 mol des Chlorkohlenwasserstoffs, bezogen auf 1 mol der magnesiumorganischen Verbindung, gegebenenfalls in Gegenwart einer aluminiumorganischen Verbindung der Formel AlR³ₙ(OR⁴)₃₋ₙ, worin R³ und R⁴ gleiche oder verschiedene Alkylreste mit 1 bis 8 Kohlenstoffatomen sind und n 0, 1, 2 und 3 bedeutet oder in Gegenwart des Umsetzungsproduktes von Aluminiumtrialkylen oder Aluminiumdialkylhydriden mit 4 bis 20 Kohlenstoffatomen enthaltenden Diolefinen, bei einer Temperatur von 30 bis 110°C,
b) Behandlung des erhaltenen Feststoffs mit einem Alkohol in einer Menge von 0,001 bis 1 mol pro Grammatom des im Feststoff enthaltenen Magnesiums bei einer Temperatur von -20 bis 150°C, und
c) Umsetzung des so erhaltenen Trägermaterials mit einer oder mehreren Verbindungen der Formel M¹Xₘ(OR⁵)₄₋ₘ, worin M¹ Titan oder Zirkon, R⁵ ein Alkylrest mit 2 bis 10 Kohlenstoffatomen, X ein Halogenatom und m eine ganze Zahl von 0 bis 4 ist, in einer Menge von 0,1 bis 5 mol pro Grammatom des im Trägermaterial enthaltenen Magnesiums bei einer Temperatur von 20 bis 180°C,
wobei in den Schritten a), b) und c) zum Durchmischen der Reaktanten anstelle eines Rührers ein Gerät zur Erzeugung von Stoßwellen verwendet wird,
und bei dem in einem zweiten Verfahrensschritt ein alpha-Olefin bei einer Temperatur von 50 bis 150°C und einem Druck von 1 bis 40 bar in Gegenwart eines Katalysators bestehend aus der im ersten Verfahrensschritt hergestellten Übergangsmetallkomponente (Komponente A) und einer metallorganischen Verbindung (Komponente B) polymerisiert wird.

2. Verfahren nach Anspruch 1, dadurch gekennzeichnet, daß ein Magnesiumdialkyl der Formel [(n-C₄H₉)_{1,2-1,7}(n-C₈H₁₇)_{0,3-0,8}Mg] verwendet wurde.

3. Verfahren nach Anspruch 1, dadurch gekennzeichnet, daß als Alkohol Ethanol oder n-Butanol verwendet wurde.

4. Verfahren nach Anspruch 1, dadurch gekennzeichnet, daß als Verbindung der Formel M¹Xₘ(OR⁵)₄₋ₘ, worin M¹, R⁵ und m die in Anspruch 1 genannte Bedeutung haben, TiCl₄ eingesetzt wurde.

5. Verfahren nach Anspruch 1, dadurch gekennzeichnet, daß der Schritt b entfällt.

6. Verfahren nach Anspruch 1, dadurch gekennzeichnet, daß die Katalysatorkomponente A einer Präpolymerisation unterzogen wurde.

7. Verfahren nach Anspruch 1, dadurch gekennzeichnet, daß die Polymerisation kontinuierlich ein- oder mehrstufig in einem Gasphasen-Verfahren erfolgt.

8. Verfahren nach Anspruch 1, dadurch gekennzeichnet, daß es ein- oder mehrstufig als Gasphasenverfahren durchgeführt wird und daß die Apparatur bei einem einstufigen Verfahren besteht aus einem Reaktor (1) mit einem Gasverteiler (11) und einer Kreisgasleitung (13), in welcher ein Verdichter (14) angeordnet ist, dem ein Wärmetauscher (15) nachgeschaltet ist, vor dem Verdichter (14) eine Zuleitung (16) in die Kreisgasleitung (13) mündet, eine weitere Zuleitung (18) in den Reaktor (1) führt, am Kopf des Reaktors (1) sich eine Abgasleitung (17) in der Kreisgasleitung (13) befindet, über eine Austragsleitung (19) und ein Absperrorgan (31) der Reaktor (1) in einen Vorratsbunker (3), welcher mit einer Entnahmeleitung (32) versehen ist, entleert werden kann,

9. Verfahren nach Anspruch 8, dadurch gekennzeichnet, daß bei einem zweistufigen Verfahren die Apparatur ergänzt wird durch einen zweiten Reaktor (2) mit Gasverteiler (21), der durch die Austragsleitung (19) mit dem Reaktor (1) verbunden ist, der Reaktor (2) mit einer Kreisgasleitung (23) versehen ist, in welcher ein Verdichter (24) und nachgeschaltetem Wärmetauscher (25) eingefügt ist, eine Zuleitung (26) vor dem Verdichter (24) in die Kreisgasleitung (23), am Kopf des Reaktors (2) sich eine Abgasleitung (27) befindet und über eine Austragsleitung (29) mit Absperrorgan (31) der Reaktor (2) in den Vorratsbunker (3) entleert werden kann.

## Claims

1. A process for the preparation of a polyolefin by polymerization of an alpha-olefin, wherein in a first process step, a component A is prepared by
a) reacting an organomagnesium compound of the formula R¹ₓMgR²₂₋ₓ, wherein R¹ and R² are identical or different alkyl radicals having 2 to 12 carbon atoms and x is a number from 0 to 2, with an aliphatic primary chlorohydrocarbon in an amount of 0.5 to 2.5 mol of the chlorohydrocarbon, based on 1 mol of the organomagnesium compound, if appropriate in the presence of an organoaluminum compound of the formula AlR³ₙ(OR⁴)₃₋ₙ, wherein R³ and R⁴ are identical or different alkyl radicals having 1 to 8 carbon atoms and n is 0, 1, 2 or 3, or in the presence of the reaction product of aluminum trialkyls or aluminum dialkyl hydrides with diolefins containing 4 to 20 carbon atoms, at a temperature of 30 to 110°C,
b) treating the resulting solid with an alcohol in an amount of 0.001 to 1 mol per gram atom of the magnesium contained in the solid, at a temperature of -20 to 150°C, and
c) reacting the resulting support with one or more compounds of the formula M¹Xₘ(OR⁵)₄₋ₘ, wherein M¹ is titanium or zirconium, R⁵ is an alkyl radical having 2 to 10 carbon atoms, X is a halogen atom and m is an integer from 0 to 4, in an amount of 0.1 to 5 mol per gram atom of the magnesium contained in the support, at a temperature of 20 to 180°C,
a device for producing shock waves being used instead of a stirrer in steps a), b) and c) for the thorough mixing of the reactants,
and wherein, in a second process step, an alphaolefin is polymerized at a temperature of 50 to 150°C and at a pressure of 1 to 40 bar in the presence of a catalyst consisting of the transition metal component (component A) prepared in the first process step and an organometallic compound (component B).

2. The process as claimed in claim 1, wherein a magnesium dialkyl of the formula [(n-C₄H₉)_{1.2-1.7}(n-C₈H₁₇)_{0.3-0.8}Mg] has been used.

3. The process as claimed in claim 1, wherein ethanol or n-butanol has been used as the alcohol.

4. The process as claimed in claim 1, wherein TiCl₄ has been used as the compound of the formula M¹Xₘ(OR⁵)₄₋ₘ, wherein M¹, R⁵ and m are as defined in claim 1.

5. The process as claimed in claim 1, wherein step b is omitted.

6. The process as claimed in claim 1, wherein the catalyst component A has been subjected to a prepolymerization.

7. The process as claimed in claim 1, wherein the polymerization takes place continuously in one or more stages in a gas phase process.

8. The process as claimed in claim 1 carried out in one or more stages as a gas phase process, wherein the apparatus in the case of a one-stage process comprises a reactor (1) with a gas diffuser (11) and a recycle gas line (13), which includes a compressor (14) and a heat exchanger (15) downstream, a feed line (16) leads into the recycle gas line (13) upstream of the compressor (14), another feed line (18) leads into the reactor (1), there is an off-gas line (17) in the recycle gas line (13) at the top of the reactor (1), and the reactor (1) can be emptied via a discharge line (19) and a shut-off device (31) into a storage bin (3), which is provided with a take-off line (32).

9. The process as claimed in claim 8, wherein the apparatus in the case of a two-stage process is extended with a second reactor (2) with gas diffuser (21), which is joined to the reactor (1) by the discharge line (19), the reactor (2) is provided with a recycle gas line (23), which includes a compresser (24) and a heat exchanger (25) downstream, a feed line (26) leads into the recycle gas line (23) upstream of the compressor (24), there is an off-gas line (27) at the top of the reactor (2), and the reactor (2) can be emptied via a discharge line (29) with shut-off device (31) into the storage bin (3).

## Revendications

1. Procédé de préparation d'une polyoléfine par polymérisation d'une alpha-oléfine dans lequel dans une première étape réactionnelle, on prépare un composant A par
a) réaction d'un composé organomagnésien de formule R¹ₓMgR²₂₋ₓ, dans laquelle R¹ et R² sont des restes alkyle identiques ou différents avec 2 à 12 atomes de carbone et x est un nombre compris entre 0 et 2, avec un hydrocarbure aliphatique primaire chloré dans une quantité de 0,5 à 2,5 moles d'hydrocarbure chloré par rapport à 1 mole du composé organomagnésien et éventuellement d'un composé organoaluminié de formule AlR³ₙ(OR⁴)₃₋ₙ dans laquelle R³ et R⁴ sont des restes alkyle identiques ou différents avec 1 à 8 atomes de carbone et n vaut 0, 1, 2 et 3 ou on fait réagir le produit de réaction de trialkylènaluminium ou d'hydrure de dialkylaluminium, à une température de 30 à 110 °C, avec des dioléfines comportant 4 à 20 atomes de carbone
b) traitement de la matière solide obtenue par un alcool en une quantité de 0,001 à 1 mole par mole-atome de magnésium contenu dans la matière solide à une température de -20 à 150 °C, et
c) réaction de la matière de support ainsi obtenue avec un ou plusieurs composés de formule M¹Xₘ(OR⁵)₄₋ₘ dans laquelle M¹ représente le titane ou le zirconium, R⁵ est un reste alkyle avec 2 à 10 atomes de carbone, X est un atome d'halogène et m est un nombre entier de 0 à 4, dans une quantité de 0,1 à 5 moles par mole-atome de magnésium contenu dans la matière de support à une température de 20 à 180 °C,
en utilisant dans les étapes a), b) et c) pour mélanger à fond les réactants, au lieu d'un agitateur, un appareil pour générer des ondes de choc,
et dans la deuxième étape du procédé, on polymérise une alpha-oléfine à une température de 50 à 150 °C et une pression de 1 à 40 bar, en présence d'un catalyseur constitué du composé de métal de transition préparé dans la première étape de procédé (composant A) et d'un composé organométallique (composant B).

2. Procédé selon la revendication 1, caractérisé en ce que l'on utilise un dialkylmagnésium de formule [(n-C₄H₉)_{1,2-1,7}(n-C₈H₁₇)_{0,3-0,8}Mg].

3. Procédé selon la revendication 1, caractérisé en ce que l'on utilise en tant qu'alcool l'éthanol ou le n-butanol.

4. Procédé selon la revendication 1, caractérisé en ce que l'on utilise en tant que composé de formule M¹Xₘ(OR⁵)₄₋ₘ, dans laquelle M¹, R⁵ et m ont les significations données dans la revendication 1, TiCl₄.

5. Procédé selon la revendication 1, caractérisé en ce que l'on abandonne l'étape b).

6. Procédé selon la revendication 1, caractérisé en ce que le composant catalytique A est soumis à une prépolymérisation.

7. Procédé selon la revendication 1, caractérisé en ce que l'on met en oeuvre la polymérisation en continu en une ou plusieurs étapes dans un procédé en phase gazeuse.

8. Procédé selon la revendication 1, caractérisé en ce que l'on le met en oeuvre en tant qu'un procédé en phase gazeuse en une ou plusieurs étapes, et en ce que l'appareillage dans le procédé en une étape est constitué d'un réacteur (1) avec un distributeur de gaz (il) et une conduite de circulation de gaz (13) dans laquelle est installé un compresseur (14), auquel est installé en arrière un échangeur de chaleur (15), avant le compresseur (14) débouche une conduite (16) dans la conduite de circulation de gaz (13), une autre conduite d'amenée (18) conduit au réacteur (1), à la tête du réacteur (1) une conduite d'évacuation de gaz (17) se trouve dans la conduite de circulation de gaz (13), on peut vider le réacteur (1) par l'intermédiaire d'une conduite d'évacuation (19) et d'un organe d'obturation (31), dans le réservoir (3) lequel est muni d'une conduite de reprise (32).

9. Procédé selon la revendication 8, caractérisé en ce que dans un procédé en deux étapes, l'appareillage est complété d'un deuxième réacteur (2) avec un distributeur de gaz (21) qui est relié au réacteur (1) par l'intermédiaire de la conduite d'évacuation (19), le réacteur (2) est muni d'une conduite de circulation de gaz (23), dans laquelle est installé un compresseur (24) et un échangeur de chaleur (25) installé en arrière, une conduite d'amenée (26) se trouve avant le compresseur (24) dans la conduite de circulation de gaz (23), à la tête du réacteur (2) se trouve une conduite d'évacuation de gaz (27) et on peut vider le réacteur (2) dans le réservoir (3) par l'intermédiaire d'une conduite d'évacuation (29) avec l'organe d'obturation (31).
